# EUROPEAN PATENT APPLICATION

(11) **EP 3 974 672 A2**
(43) Date of publication of application: **30.03.2022**
(21) Application number: 21199157.5
(22) Date of filing: 27.09.2021
(51) Int. Cl.: F16D 25/08, F16D 28/00

(54) **ACTUATOR FOR ACTUATING THE MASTER CYLINDER OF A FLUID ACTUATED CLUTCH**

(30) Priority: 29.09.2020 JP 2020163920
(71) Applicant: AISIN CORPORATION, Aichi 448-8650 (JP)
(72) Inventor: SUYAMA, Taishi, KARIYA, AICHI, 448-8650 (JP); MORITA, Yushi, KARIYA, AICHI, 448-8650 (JP)
(74) Representative: Cabinet Beau de Loménie

(57) **Abstract**

An actuator (1) for a clutch (5) includes a housing (100), a power source (101), a first gear (102) connected to an output shaft (lOlx) of the power source (101), a second gear (103) configured to turn by meshing with the first gear (102), an output rod (106) connected to the second gear (103) at one end, and configured to engage or disengage the clutch (5), and an assist spring (107) configured to assist a turn of the second gear (103). A deflection amount of the assist spring (107) is changeable only within a range between a first deflection amount corresponding to a case where the clutch (5) is engaged and a second deflection amount corresponding to a case where the clutch (5) is disengaged and smaller than the first deflection amount.

## Description

### 1. Field of the Invention

The technology disclosed herein relates to an actuator for a clutch.

### 2. Description of Related Art

Hitherto, there is known a so-called automated manual transmission (AMT) system to be mounted on a vehicle employing a manual transmission (MT) system and configured to actuate a clutch by using an actuator. The AMT system automatically executes a gear shifting operation by operating the actuator to engage or disengage the clutch based on, for example, driver's intention and vehicle conditions.

To engage or disengage the clutch by changing a posture of, for example, a diaphragm spring that is one component of the clutch, the actuator for use in the AMT system mainly includes a power source such as a motor, a worm gear connected to an output shaft of the power source, a worm wheel meshing with the worm gear, and an output rod connected to the worm wheel. Japanese Unexamined Patent Application Publication Nos. 2003-287087 (JP 2003-287087 A) and 2008-121714 (JP 2008-121714 A) each disclose an actuator further including an assist spring configured to assist a turn of the worm wheel (linear motion of the output rod) for the purpose of, for example, downsizing the power source.

### SUMMARY OF THE INVENTION

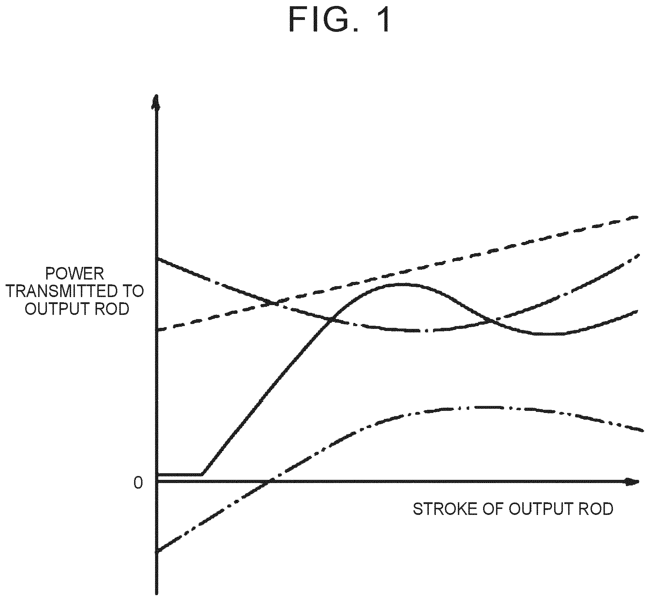

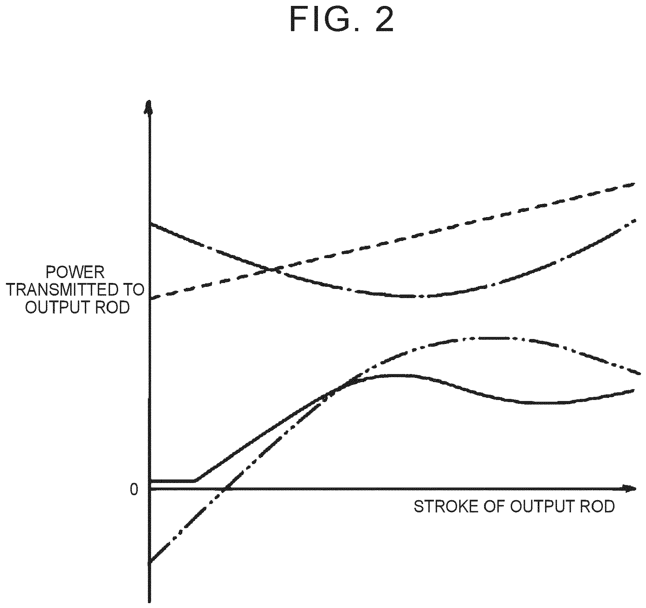

It is known that the actuator disclosed in each of JP 2003-287087 A and JP 2008-121714 A has output characteristics illustrated in FIG. 1 and FIG. 2. FIG. 1 is a diagram illustrating output characteristics of a related-art actuator in a case where a clutch makes transition from an engaged state to a disengaged state, in which a horizontal axis represents a stroke of linear motion of an output rod and a vertical axis represents power transmitted to the output rod. FIG. 2 is a diagram illustrating output characteristics of the related-art actuator in a case where the clutch makes transition from the disengaged state to the engaged state, in which a horizontal axis represents the stroke of the linear motion of the output rod and a vertical axis represents the power transmitted to the output rod. In FIG. 1 and FIG. 2, a continuous line represents a clutch load, a long dashed short dashed line represents main power transmitted from a power source to the output rod, a long dashed double-short dashed line represents assist power transmitted from an assist spring, and a dashed line represents total power including the main power and the assist power. The stroke of the output rod on the horizontal axis in FIG. 1 and FIG. 2 may be replaced with a rotation angle (rotational position) of a worm wheel.

The output characteristics of the related-art actuator in FIG. 1 and FIG. 2 indicate that the total power represented by the dashed line gradually increases along with the stroke of the output rod. When the clutch load changes for reasons such as an increase or decrease in the amount of hydraulic oil in a cylinder that houses the output rod and generates a hydraulic pressure based on the linear motion of the output rod, or wear, deterioration, or deformation of various elements constituting the clutch, the dashed line (total power) and the continuous line (clutch load) in FIG. 1 are close to each other. Thus, a problem arises in terms of a possibility that the state transition of the clutch from the engaged state to the disengaged state is not executed smoothly.

When the clutch makes transition from the disengaged state to the engaged state, the relationship between the assist power transmitted from the assist spring and represented by the long dashed double-short dashed line and the clutch load represented by the continuous line is reversed at a stroke St0 of the output rod as illustrated in FIG. 2 (that is, the clutch load is larger than the assist power when the stroke of the output rod is smaller than St0, and the assist power is equal to or larger than the clutch load when the stroke of the output rod is equal to or larger than St0). Thus, a problem arises in that the actuator is likely to have a backlash inside, thereby causing fluctuation in the stroke of the output rod (difference between a control value and a measured value of the output rod).

In view of the above, various embodiments provide an actuator for a clutch that can securely and accurately engage or disengage the clutch and can reduce fluctuation in a stroke of an output rod.

An actuator for a clutch according to a first aspect of the present invention includes a housing, a power source, a first gear connected to an output shaft of the power source, a second gear configured to turn by meshing with the first gear, an output rod connected to the second gear at one end, and configured to advance or retreat in a linear direction in conjunction with a turn of the second gear to engage or disengage the clutch, and an assist spring supported on the housing at one end and connected to the second gear at the other end to assist the turn of the second gear. A deflection amount of the assist spring that extends or contracts in conjunction with the turn of the second gear is changeable only within a range between a first deflection amount corresponding to a case where the clutch is engaged and a second deflection amount corresponding to a case where the clutch is disengaged and smaller than the first deflection amount.

In this aspect, the assist spring can constantly transmit positive assist power to the second gear irrespective of a rotational position of the second gear, that is, an advance or retreat position of the output rod in the linear direction (stroke position). Thus, the actuator for the clutch according to the first aspect can securely and accurately engage or disengage the clutch, and can reduce the fluctuation in the stroke of the output rod.

An actuator for a clutch according to a second aspect of the present invention includes a housing, a power source, a first gear connected to an output shaft of the power source, a second gear configured to turn by meshing with the first gear, an output rod connected to the second gear at one end, and configured to advance or retreat in a linear direction in conjunction with a turn of the second gear to engage or disengage the clutch, and an assist spring supported on the housing at one end and connected to the second gear at the other end to assist the turn of the second gear. A magnitude of total power including main power to be transmitted to the second gear via the first gear and output from the second gear and assist power to be generated by the assist spring is substantially constant irrespective of a rotational position of the second gear.

In this aspect, the magnitude of the total power is substantially constant irrespective of the rotational position of the second gear, that is, the advance or retreat position of the output rod in the linear direction (stroke position). Thus, it is possible to securely and accurately engage or disengage the clutch, and reduce the fluctuation in the stroke of the output rod.

In the actuator for the clutch according to the first aspect, the first deflection amount may be smaller than a maximum deflection amount of the assist spring.

With this structure, the assist spring can constantly transmit the positive assist power to the second gear securely irrespective of the rotational position of the second gear, that is, the advance or retreat position of the output rod in the linear direction (stroke position).

In the actuator for the clutch according to the first aspect and the second aspect, a connector having a spherical shape may be provided at the one end of the output rod, and the second gear and the output rod may be connected by receiving the connector in a spherical recess provided in the second gear.

With this structure, the number of components related to the connection between the second gear and the output rod can be reduced. By spherical contact between the second gear and the output rod, the contact area between the second gear and the output rod can be increased.

In the actuator for the clutch according to the first aspect and the second aspect, the second gear may include a speed reducing mechanism including a third gear meshing with the first gear, and a fourth gear meshing with the third gear and connected to the output rod.

With this structure, it is possible to provide the actuator for the clutch that can output a desired magnitude of power while downsizing the power source.

According to the aspects described above, it is possible to provide the actuator for the clutch that can securely and accurately engage or disengage the clutch and can reduce the fluctuation in the stroke of the output rod.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating output characteristics of a related-art actuator in a case where a clutch makes transition from an engaged state to a disengaged state, in which a horizontal axis represents a stroke of linear motion of an output rod and a vertical axis represents power transmitted to the output rod;
FIG. 2 is a diagram illustrating output characteristics of the related-art actuator in a case where the clutch makes transition from the disengaged state to the engaged state, in which a horizontal axis represents the stroke of the linear motion of the output rod and a vertical axis represents the power transmitted to the output rod;
FIG. 3 is a schematic diagram illustrating the structures of an actuator for a clutch according to one embodiment and a clutch to which the actuator for the clutch is applied;
FIG. 4 is a schematic diagram illustrating the structure of the related-art actuator for a clutch in a case where the clutch is in an engaged state;
FIG. 5 is a schematic diagram illustrating the structure of the related-art actuator for the clutch in a case where the clutch is in a disengaged state;
FIG. 6 is a schematic diagram illustrating the structure of the actuator for the clutch according to the embodiment in a case where the clutch is in an engaged state;
FIG. 7 is a schematic diagram illustrating the structure of the actuator for the clutch according to the embodiment in a case where the clutch is in a disengaged state;
FIG. 8 is a diagram illustrating output characteristics of the actuator for the clutch according to the embodiment in a case where the clutch makes transition from the engaged state to the disengaged state, in which a horizontal axis represents a stroke of linear motion of an output rod and a vertical axis represents power transmitted to the output rod;
FIG. 9 is a diagram illustrating output characteristics of the actuator for the clutch according to the embodiment in a case where the clutch makes transition from the disengaged state to the engaged state, in which a horizontal axis represents the stroke of the linear motion of the output rod and a vertical axis represents the power transmitted to the output rod;
FIG. 10 is a schematic diagram illustrating the structure of an actuator for a clutch according to another embodiment;
FIG. 11 is a schematic enlarged view illustrating a connection portion between a worm wheel and an output rod in an actuator for a clutch according to still another embodiment; and
FIG. 12 is a schematic diagram illustrating a structure in which the worm wheel is in spherical contact with the output rod in the actuator for the clutch according to the still other embodiment.

### DETAILED DESCRIPTION OF EMBODIMENTS

Various embodiments of the present invention are described below with reference to the accompanying drawings. In the drawings, common components are represented by the same reference symbols. For convenience of the description, a component illustrated in a certain figure may be omitted in another figure. The accompanying drawings are not necessarily scaled accurately.

### 1. Structure of Actuator for Clutch

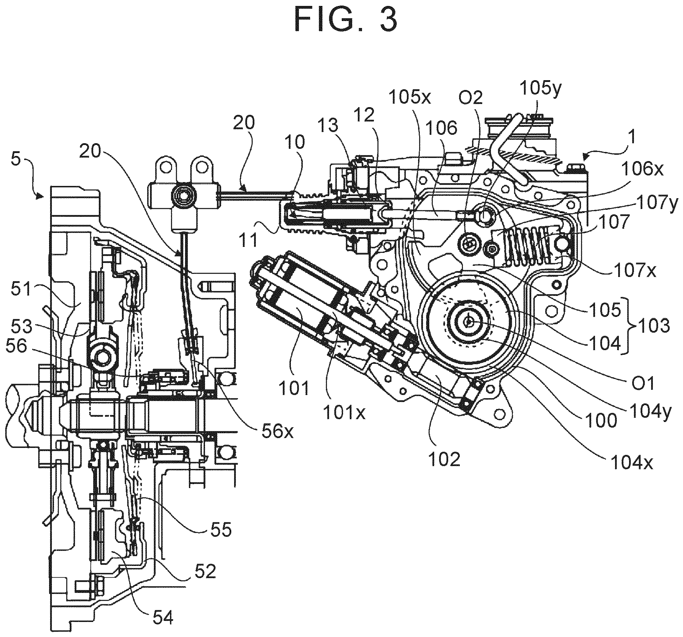

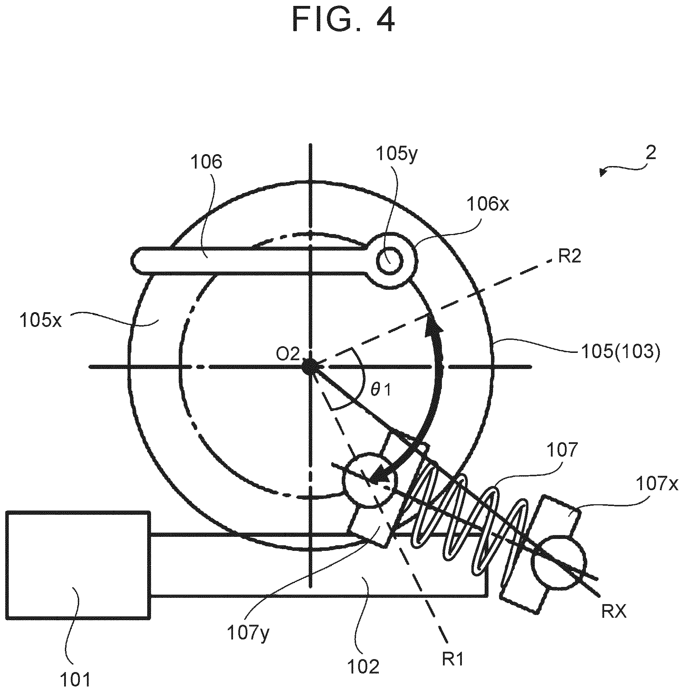

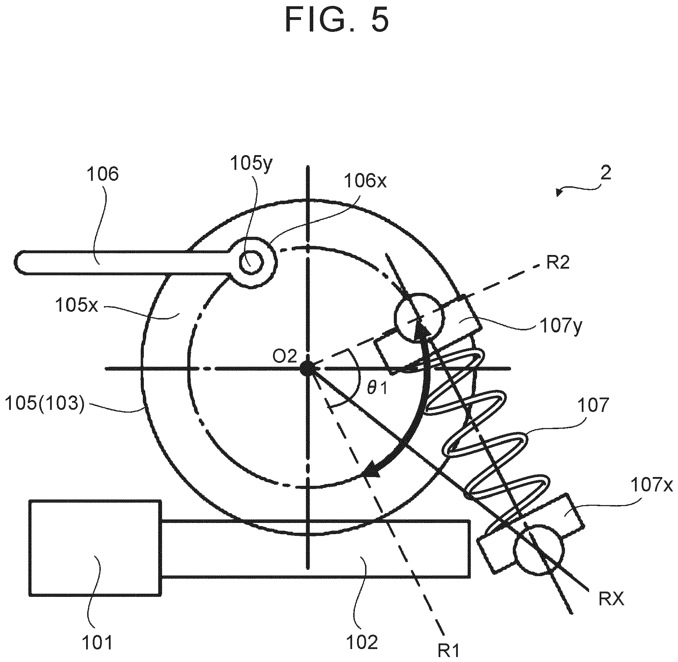

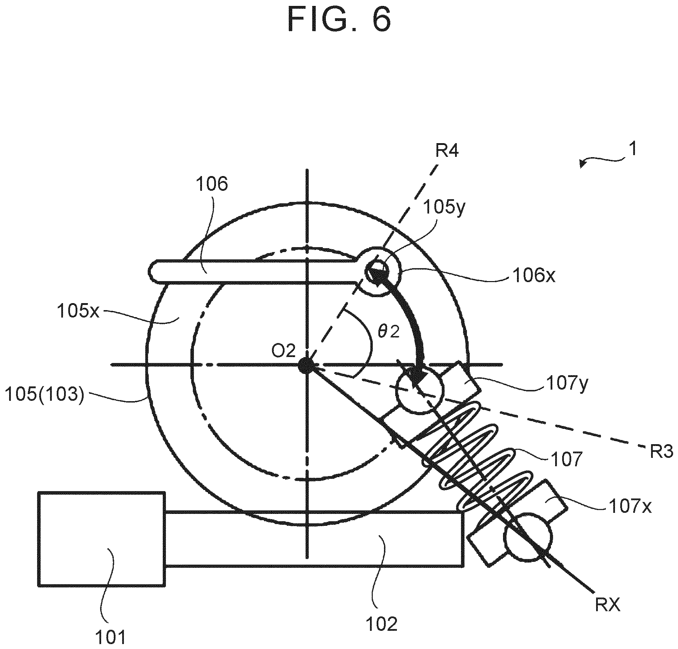

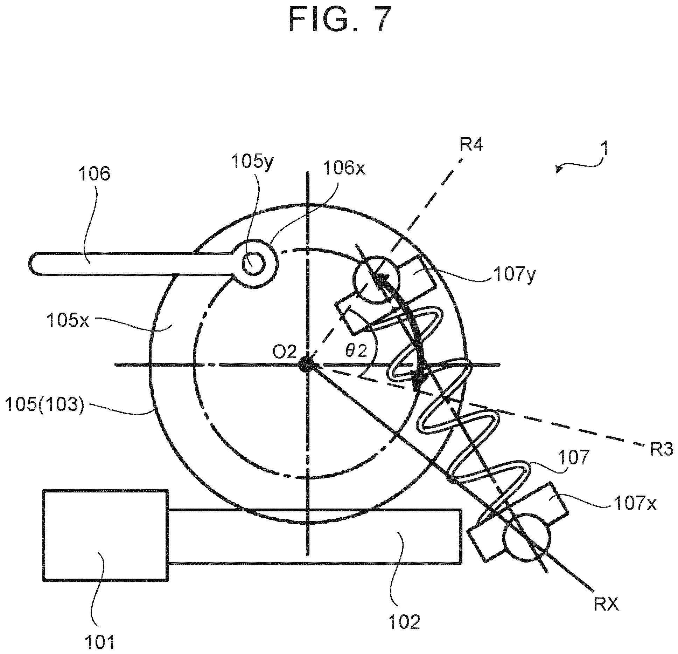

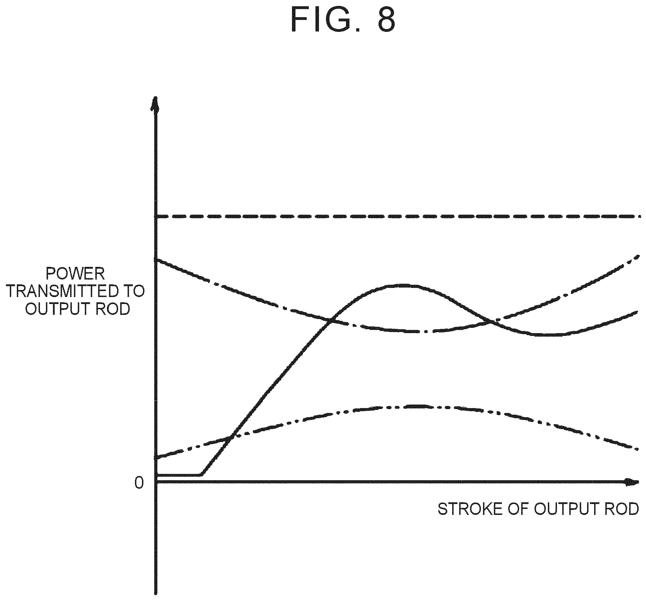

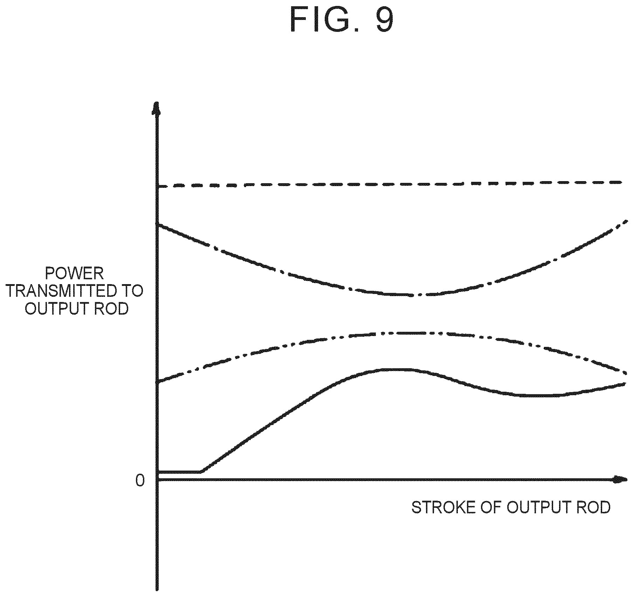

The overall structure of an actuator for a clutch according to one embodiment is outlined with reference to FIG. 3 to FIG. 9. FIG. 3 is a schematic diagram illustrating the structures of an actuator 1 for a clutch according to the embodiment and a clutch 5 to which the actuator 1 for the clutch is applied. FIG. 4 is a schematic diagram illustrating the structure of a related-art actuator 2 for a clutch in a case where the clutch 5 is in an engaged state. FIG. 5 is a schematic diagram illustrating the structure of the related-art actuator 2 for the clutch in a case where the clutch 5 is in a disengaged state. FIG. 6 is a schematic diagram illustrating the structure of the actuator 1 for the clutch according to the embodiment in a case where the clutch 5 is in the engaged state. FIG. 7 is a schematic diagram illustrating the structure of the actuator 1 for the clutch according to the embodiment in a case where the clutch 5 is in the disengaged state. FIG. 8 is a diagram illustrating output characteristics of the actuator 1 for the clutch according to the embodiment in a case where the clutch 5 makes transition from the engaged state to the disengaged state, in which a horizontal axis represents a stroke of linear motion of an output rod 106 and a vertical axis represents power transmitted to the output rod 106. FIG. 9 is a diagram illustrating output characteristics of the actuator 1 for the clutch according to the embodiment in a case where the clutch 5 makes transition from the disengaged state to the engaged state, in which a horizontal axis represents the stroke of the linear motion of the output rod 106 and a vertical axis represents the power transmitted to the output rod 106.

The actuator 1 for the clutch according to the embodiment engages or disengages the clutch 5, and is connected to the clutch 5 via a cylinder member 10 and an oil path 20 filled with hydraulic oil.

The clutch 5, the cylinder member 10, and the oil path 20 may be a clutch, a cylinder member, and an oil path known in the related art. Specifically, as illustrated in FIG. 3, the clutch 5 mainly includes a flywheel 51, a clutch cover 52, a clutch disc 53, a pressure plate 54, a diaphragm spring 55, and a release bearing 56. Since the structure of the clutch 5 is known (see, for example, JP 2008-121714 A), detailed description is omitted.

As illustrated in FIG. 3, the cylinder member 10 mainly includes a hydraulic housing 11, a cylinder 12, and a piston 13. Since the structure of the cylinder member 10 is known (see, for example, JP 2008-121714 A), detailed description is omitted.

The oil path 20 has a function of supplying a hydraulic pressure to an oil chamber 56x in the release bearing 56 of the clutch 5. The hydraulic pressure is generated such that the piston 13 of the cylinder member 10 slides inside the cylinder 12 in conjunction with the stroke of the output rod 106 in the actuator 1 for the clutch. The clutch 5 can be disengaged by pushing the release bearing 56 against the diaphragm spring 55 based on the hydraulic pressure transmitted to the oil chamber 56x.

As illustrated in FIG. 3, the actuator 1 for the clutch mainly includes an actuator housing 100, a motor 101 serving as a power source, a worm gear 102 serving as a first gear connected to an output shaft 101x of the motor 101, a worm wheel 103 serving as a second gear configured to turn by meshing with the worm gear 102, the output rod 106 connected to the worm wheel 103 at one end and to the piston 13 of the cylinder member 10 at the other end, and an assist spring 107 supported on the actuator housing 100 at one end and connected to the worm wheel 103 at the other end.

As illustrated in FIG. 3, the actuator housing 100 is a single-swing housing that mainly houses the worm gear 102, the worm wheel 103, the output rod 106, and the assist spring 107. In a case where the clutch 5 is used for a vehicle, the actuator housing 100 is fixed to any appropriate place in the vehicle to support the motor 101.

The motor 101 may be a general electric motor including a stator and a rotor. When the motor 101 receives a control command (signal) from a controller (not illustrated) via a wired or wireless communication network, the motor 101 can be driven in a predetermined rotational direction based on the control command to output power through the output shaft 101x.

As illustrated in FIG. 3, the worm gear 102 is connected to the output shaft 101x of the motor 101 at one end, and can be driven to rotate together with the output shaft 101x. The other end of the worm gear 102 is supported on the actuator housing 100.

As illustrated in FIG. 3, the worm wheel 103 meshes with the worm gear 102. Thus, the power of the motor 101 transmitted to the worm gear 102 is transmitted to the worm wheel 103. As illustrated in FIG. 3, the worm wheel 103 of the actuator 1 for the clutch according to the embodiment may be a two-stage speed reducing mechanism including a first worm wheel 104 serving as a third gear meshing with the worm gear 102, and a second worm wheel 105 serving as a fourth gear meshing with the first worm wheel 104 and connected to the output rod 106. Thus, the worm wheel 103 can output the power transmitted from the worm gear 102 to the output rod 106 while increasing the power.

In a case where the worm wheel 103 is the speed reducing mechanism, the number of stages is not limited to two, but may be three or more as appropriate depending on the magnitude of power to be output from the worm wheel 103 to the output rod 106. In a case where the worm wheel 103 is a single-stage gear mechanism instead of a multi-stage gear mechanism, the worm wheel 103 may have only the second worm wheel 105 in FIG. 3 while the first worm wheel 104 is omitted. In this case, the second worm wheel 105 meshes with the worm gear 102.

The first worm wheel 104 illustrated in FIG. 3 may mainly have a rotation center O1, an externally toothed first gear portion 104x rotatable about the rotation center O1 and meshing with the worm gear 102, and an externally toothed second gear portion 104y rotatable about the rotation center O1 together with the first gear portion 104x and offset from the first gear portion 104x in an axial direction of the rotation center O1 (front-to-back direction of the drawing sheet of FIG. 3). The first worm wheel 104 meshes with the second worm wheel 105 at the second gear portion 104y to form the speed reducing mechanism together with the second worm wheel 105.

The second worm wheel 105 illustrated in FIG. 3 may mainly have a rotation center O2, an externally toothed body 105x rotatable about the rotation center O2 and meshing with the second gear portion 104y of the first worm wheel 104, and a receptacle 105y provided on the body 105x and connectable to the output rod 106. The receptacle 105y may be a substantially cylindrical receptacle projecting from the body 105x in an axial direction (front-to-back direction of the drawing sheet of FIG. 3). For example, a substantially cylindrical pin member serving as the receptacle 105y may be fitted or press-fitted into the body 105x.

The output rod 106 is connected to the receptacle 105y of the worm wheel 103 (second worm wheel 105) at one end and to the piston 13 of the cylinder member 10 at the other end. The output rod 106 advances or retreats in a linear direction (makes a stroke) by transmitting, via the receptacle 105y of the worm wheel 103, total power including power based on the motor 101 (main power) transmitted to the worm wheel 103 (second worm wheel 105) and assist power from the assist spring 107 (to be exact, transmitting a component force of the total power in the linear direction corresponding to an extending direction of the cylinder 12). That is, the output rod 106 can advance or retreat in the linear direction in conjunction with a turn of the worm wheel 103 (second worm wheel 105).

When the output rod 106 advances or retreats in the linear direction corresponding to the extending direction of the cylinder 12, the piston 13 connected to the output rod 106 is slidable inside the cylinder 12. Thus, a hydraulic pressure can be generated in the hydraulic oil in the cylinder 12. The generated hydraulic pressure is supplied to the oil chamber 56x in the release bearing 56 of the clutch 5 via the oil path 20. Therefore, the release bearing 56 is pushed against the diaphragm spring 55. Thus, the clutch 5 can be engaged or disengaged.

A connector 106x is provided at one end of the output rod 106. The connector 106x is connectable to the receptacle 105y of the worm wheel 103 (second worm wheel 105). Examples of the connector 106x include a connector having a shape of a substantial ring with a bore diameter larger than the outside diameter of the receptacle 105y so that the receptacle 105y is inserted into the connector. With this structure, the receptacle 105y can abut against the connector 106x by turning the worm wheel 103 (second worm wheel 105). Thus, power is transmitted from the worm wheel 103 to the output rod 106.

The assist spring 107 is supported on the actuator housing 100 at one end via a seat member 107x, and is connected to the worm wheel 103 (second worm wheel 105) at the other end via a seat member 107y, thereby assisting the turn of the worm wheel 103 (second worm wheel 105). The assist spring 107 may be a general coil spring.

A relationship between the turn of the worm wheel 103 and the posture of the assist spring 107 is described with reference to FIG. 4 to FIG. 7. As described above, FIG. 4 and FIG. 5 are schematic diagrams focusing on the structure of the related-art actuator 2 for the clutch, and FIG. 6 and FIG. 7 are schematic diagrams focusing on the structure of the actuator 1 for the clutch according to the embodiment. To facilitate understanding, the engaged state herein means a state in which the clutch is completely engaged instead of being partially engaged. Similarly, the disengaged state herein means a state in which the clutch is completely disengaged. For convenience, in the worm wheel 103 of FIG. 4 to FIG. 7, the first worm wheel 104 is omitted and the second worm wheel 105 directly meshes with the worm gear 102.

When the clutch 5 is in the engaged state in the related-art actuator 2 for the clutch, the assist spring 107 is deflected to a predetermined degree as illustrated in FIG. 4. At this time, the other end of the assist spring 107 is located on a line R1 passing through the rotation center O2 of the worm wheel 103 (second worm wheel 105).

When the clutch 5 is in the disengaged state in the related-art actuator 2 for the clutch, as illustrated in FIG. 5, the assist spring 107 is deflected by a deflection amount smaller than that in the case of FIG. 4 (stretched as compared to the case of FIG. 4). At this time, the other end of the assist spring 107 is located on a line R2 passing through the rotation center O2 of the worm wheel 103 (second worm wheel 105).

That is, the other end of the assist spring 107 in the related-art actuator 2 for the clutch moves along a trajectory represented by an arcuate wide arrow in FIG. 4 and FIG. 5 in response to an operation of switching engagement and disengagement of the clutch 5. Along with the positional change of the other end, the posture (inclination) of the assist spring 107 changes as well (when the clutch 5 makes transition from the engaged state to the disengaged state, the posture illustrated in FIG. 4 changes to the posture illustrated in FIG. 5 and, when the clutch 5 makes transition from the disengaged state to the engaged state, the posture illustrated in FIG. 5 changes to the posture illustrated in FIG. 4). In the case of FIG. 4 and FIG. 5, when the clutch 5 makes transition from the engaged state to the disengaged state, the worm wheel 103 (second worm wheel 105) rotates counterclockwise by an angle θ1° between the line R1 and the line R2. When the clutch 5 makes transition from the disengaged state to the engaged state, the worm wheel 103 (second worm wheel 105) rotates clockwise by the angle θ1°.

When the other end of the assist spring 107 in the related-art actuator 2 for the clutch moves along the trajectory represented by the arcuate wide arrow in FIG. 4 and FIG. 5, the other end crosses a line RX where the assist spring 107 is deflected most. The line RX connects the rotation center O2 of the worm wheel 103 (second worm wheel 105) and the one end of the assist spring 107 that is fixed to the actuator housing 100. Thus, when the other end of the assist spring 107 is located on the line RX, the rotation center O2, the one end of the assist spring 107, and the other end of the assist spring 107 are located straight on the line RX. As a result, the distance between the one end and the other end of the assist spring 107 is shortest, and the assist spring 107 is deflected most (maximum deflection amount).

Thus, when the clutch 5 makes transition from the engaged state to the disengaged state in the related-art actuator 2 for the clutch illustrated in FIG. 4 and FIG. 5, the assist spring 107 is gradually deflected until the other end of the assist spring 107 moves from the position on R1 to the position on RX. As a result, the spring force of the assist spring 107 turns into a load on the worm wheel 103 (second worm wheel 105). This point may be understood also from the fact that the output characteristics of the related-art actuator 2 for the clutch in FIG. 1 and FIG. 2 indicate that the assist power transmitted from the assist spring 107 is "negative" when the stroke of the output rod 106 is close to 0. The problems described above may arise in the related-art actuator 2 for the clutch.

When the clutch 5 is in the engaged state (the output rod 106 retreats most from the cylinder member 10 and no hydraulic pressure is supplied to the hydraulic oil in the cylinder 12) in the actuator 1 for the clutch according to the embodiment, the assist spring 107 is deflected to a predetermined degree (first deflection amount) as illustrated in FIG. 6. At this time, the other end of the assist spring 107 is located on a line R3 passing through the rotation center O2 of the worm wheel 103 (second worm wheel 105). The first deflection amount is smaller than the maximum deflection amount of the assist spring 107 (the other end of the assist spring 107 is located on the line RX), meaning that the assist spring 107 is deflected by a predetermined amount (predetermined degree).

When the clutch 5 is in the disengaged state (the output rod 106 advances most toward the cylinder member 10 and a maximum hydraulic pressure is supplied to the hydraulic oil in the cylinder 12) in the actuator 1 for the clutch according to the embodiment, as illustrated in FIG. 7, the assist spring 107 is deflected by a deflection amount (second deflection amount) smaller than that in the case of FIG. 6 (stretched as compared to the case of FIG. 6). At this time, the other end of the assist spring 107 is located on a line R4 passing through the rotation center O2 of the worm wheel 103 (second worm wheel 105).

That is, the other end of the assist spring 107 in the actuator 1 for the clutch according to the embodiment moves along a trajectory represented by an arcuate wide arrow in FIG. 6 and FIG. 7 in response to an operation of switching engagement and disengagement of the clutch 5. Along with the positional change of the other end, the posture (inclination) of the assist spring 107 changes as well (when the clutch 5 makes transition from the engaged state to the disengaged state, the posture illustrated in FIG. 6 changes to the posture illustrated in FIG. 7 and, when the clutch 5 makes transition from the disengaged state to the engaged state, the posture illustrated in FIG. 7 changes to the posture illustrated in FIG. 6). In the case of FIG. 6 and FIG. 7, when the clutch 5 makes transition from the engaged state to the disengaged state, the worm wheel 103 (second worm wheel 105) rotates counterclockwise by an angle θ2° between the line R3 and the line R4. When the clutch 5 makes transition from the disengaged state to the engaged state, the worm wheel 103 (second worm wheel 105) rotates clockwise by the angle θ2°.

Unlike the related art described above, when the other end of the assist spring 107 in the actuator 1 for the clutch according to the embodiment moves along the trajectory represented by the arcuate wide arrow in FIG. 6 and FIG. 7, the other end does not cross the line RX where the assist spring 107 is deflected most. In other words, the deflection amount of the assist spring 107 in the actuator 1 for the clutch according to the embodiment changes only within a range between the first deflection amount corresponding to the case where the clutch 5 is engaged and the second deflection amount corresponding to the case where the clutch 5 is disengaged and smaller than the first deflection amount.

Thus, when the clutch 5 makes transition from the engaged state to the disengaged state in the actuator 1 for the clutch according to the embodiment illustrated in FIG. 6 and FIG. 7, the assist spring 107 can constantly output (transmit) its spring force to the worm wheel 103 (second worm wheel 105) as the assist power while gradually reducing the deflection amount until the other end of the assist spring 107 moves from the position on R3 to the position on R4.

The actuator 1 for the clutch according to the embodiment illustrated in FIG. 6 and FIG. 7 can have the output characteristics illustrated in FIG. 8 and FIG. 9. In FIG. 8 and FIG. 9, a continuous line represents a clutch load (load necessary to push the release bearing 56 against the diaphragm spring 55 to change the posture of the diaphragm spring 55), a long dashed short dashed line represents the main power transmitted from the motor 101 to the output rod 106, a long dashed double-short dashed line represents the assist power transmitted from the assist spring 107, and a dashed line represents the total power including the main power and the assist power. The stroke of the output rod 106 on the horizontal axis in FIG. 8 and FIG. 9 may be replaced with a rotation angle (rotational position) of the worm wheel 103.

As illustrated in FIG. 8 and FIG. 9, the magnitude of the total power of the actuator 1 for the clutch according to the embodiment in which the assist spring 107 is arranged as described above is substantially constant irrespective of the stroke of the output rod 106 (rotational position of the worm wheel). Thus, the actuator 1 for the clutch according to the embodiment can securely and accurately execute the operation related to engagement or disengagement of the clutch 5.

As illustrated in FIG. 9, the relationship between the assist power transmitted from the assist spring 107 and the clutch load is not reversed when the clutch 5 makes transition from the disengaged state to the engaged state. Thus, the actuator 1 for the clutch according to the embodiment can reduce fluctuation in the stroke of the output rod 106.

### 2. Modified Examples

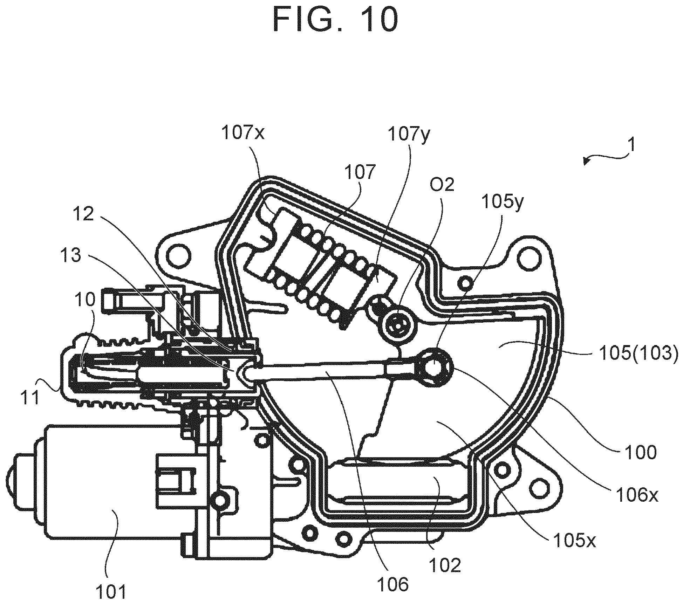

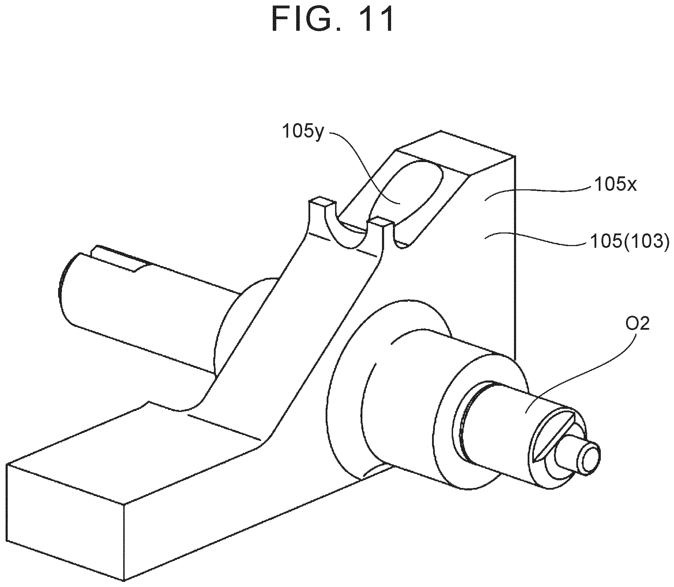

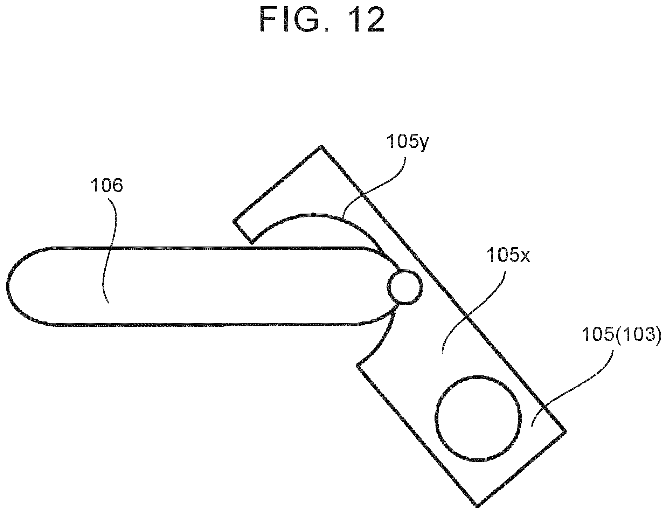

Next, the structures of actuators 1 for a clutch according to other embodiments are described with reference to FIG. 10 to FIG. 12. FIG. 10 is a schematic diagram illustrating the structure of an actuator 1 for a clutch according to another embodiment. FIG. 11 is a schematic enlarged view illustrating a connection portion between a worm wheel 103 and an output rod 106 in an actuator 1 for a clutch according to still another embodiment. FIG. 12 is a schematic diagram illustrating a structure in which the worm wheel 103 is in spherical contact with the output rod 106 in the actuator 1 for the clutch according to the still other embodiment.

### 2-1. Modified Example 1

The actuator 1 for the clutch according to Modified Example 1 (other embodiment) has a structure substantially similar to that of the actuator 1 for the clutch according to the embodiment described above, but the assist spring 107 is arranged at a position different from that in the embodiment described above as illustrated in FIG. 10. Specifically, in the embodiment described above, the assist spring 107 is provided at a position opposite to that of the output rod 106 (substantial 3-o'clock position on the worm wheel 103) with respect to the rotation center O2 of the worm wheel 103 (second worm wheel 105) as illustrated in FIG. 3. In Modified Example 1, the assist spring 107 is provided at a position on the same side as that of the output rod 106 (substantial 10-o'clock position on the worm wheel 103) with respect to the rotation center O2.

The assist spring 107 may be arranged at any position with respect to the rotation center O2 as long as the arrangement condition described above (the other end of the assist spring 107 does not cross the line RX when moving in conjunction with the turn of the worm wheel 103) is satisfied.

### 2-2. Modified Example 2

The actuator 1 for the clutch according to Modified Example 2 (still other embodiment) differs from the actuator 1 for the clutch according to the embodiment described above in terms of a method for connecting the worm wheel 103 (second worm wheel 105) and the output rod 106.

In Modified Example 2, the shape of the connector 106x of the output rod 106 differs from that in the embodiment described above as illustrated in FIG. 11 and FIG. 12. The shape may be a spherical shape. In Modified Example 2, the worm wheel 103 (second worm wheel 105) includes a receptacle 105y as a spherical recess to receive the connector 106x having the spherical shape.

By connecting the worm wheel 103 (second worm wheel 105) and the output rod 106 as in Modified Example 2, the number of components related to the connection between the worm wheel 103 and the output rod 106 can be reduced. By the spherical contact between the worm wheel 103 and the output rod 106, the contact area between the worm wheel 103 and the output rod 106 can be increased, thereby reducing a contact pressure applied to their contact surfaces.

Although various embodiments are exemplified above, the embodiments are only illustrative and are not intended to limit the scope of the invention. The embodiments may be implemented in various other forms, and the elements may be omitted, replaced, or changed variously without departing from the spirit of the invention. The structures, shapes, sizes, lengths, widths, thicknesses, heights, and numbers may be changed as appropriate.

## Claims

1. An actuator (1) for a clutch (5), comprising:
a housing (100);
a power source (101);
a first gear (102) connected to an output shaft (101x) of the power source (101);
a second gear (103) configured to turn by meshing with the first gear (102);
an output rod (106) connected to the second gear (103) at one end, and configured to advance or retreat in a linear direction in conjunction with a turn of the second gear (103) to engage or disengage the clutch (5); and
an assist spring (107) supported on the housing (100) at one end and connected to the second gear (103) at the other end to assist the turn of the second gear (103), wherein
a deflection amount of the assist spring (107) that is configured to extend or contract in conjunction with the turn of the second gear (103) is changeable only within a range between a first deflection amount corresponding to a case where the clutch (5) is engaged and a second deflection amount corresponding to a case where the clutch (5) is disengaged and smaller than the first deflection amount.

2. An actuator (1) for a clutch (5),comprising
a housing (100);
a power source (101);
a first gear (102) connected to an output shaft (101x) of the power source (101);
a second gear (103) configured to turn by meshing with the first gear (102);
an output rod (106) connected to the second gear (103) at one end, and configured to advance or retreat in a linear direction in conjunction with a turn of the second gear (103) to engage or disengage the clutch (5); and
an assist spring (107) supported on the housing (100) at one end and connected to the second gear (103) at the other end to assist the turn of the second gear (103), wherein
a magnitude of total power including main power to be transmitted to the second gear (103) via the first gear (102) and output from the second gear (103) and assist power to be generated by the assist spring (107) is substantially constant irrespective of a rotational position of the second gear (103).

3. The actuator (1) according to claim 1, wherein the first deflection amount is smaller than a maximum deflection amount of the assist spring (107).

4. The actuator (1) according to any one of claims 1 to 3, wherein:
a connector (106x) having a spherical shape is provided at the one end of the output rod (106); and
the second gear (103) and the output rod (106) are connected by receiving the connector (106x) in a spherical recess (105y) provided in the second gear (103).

5. The actuator (1) according to any one of claims 1 to 4, wherein the second gear (103) includes a speed reducing mechanism including a third gear (104) meshing with the first gear (102), and a fourth gear (105) meshing with the third gear (104) and connected to the output rod (106).
